Europäisches Patentamt

European Patent Office

Office européen des brevets

(19)

(11) Publication number:

**0 358 444**
A1

(12) **EUROPEAN PATENT APPLICATION**

(21) Application number: **89308964.9**

(22) Date of filing: **05.09.89**

(51) Int. Cl.5: **A 23 L 1/22**
A 23 L 2/26, A 23 L 1/052

(30) Priority: **05.09.88 GB 8820811**

(43) Date of publication of application:
**14.03.90 Bulletin 90/11**

(84) Designated Contracting States: **BE DE FR GB NL**

(71) Applicant: **CERESTAR HOLDING BV**
**Nijverheidsstraat 1 P.O. Box 9**
**NL-4550 AA Sas Van Gent (NL)**

(72) Inventor: **Gonze, Michel Andre Henri**
**Avenue du Forum 15, Bte 30**
**B-1020 Bruxelles (BE)**

**Van Der Schueren, Freddy Maurits Luc**
**P. Corneliskaai 29**
**B-9300 Aalst (BE)**

**Wastijn, Mark Willem**
**Zeelsebaan 35**
**B-9150 Dendermonde (BE)**

(74) Representative: **Wilkinson, Stephen John et al**
**c/o Stevens, Hewlett & Perkins 5 Quality Court Chancery Lane**
**London WC2A 1HZ (GB)**

(54) **Flavour compositions.**

(57) A freeze-thaw stable flavour composition characterized in that it comprises water, an essential oil flavour and an emulsifying amount of an extruded, crossbonded, monosubstituted starch.

Bundesdruckerei Berlin

**Description**

**Flavour compositions CER-4**

The present invention relates to flavour compositions comprising modified starches and in particular to flavour compositions used in the production of soft drinks both in liquid and powder form.

In the soft drinks industry the most popular fruit flavours are the citrus flavours, orange, lemon, lime and grapefruit. The juice of the fruit has been used for many years as the flavour source but in the last thirty years increasing use has been made of the comminuted whole fruit which gives a more authentic and concentrated flavour than the juice alone. A large proportion of the flavour in the comminuted fruit is derived from the peel and is obtained as a water-insoluble essential oil. More than 90% of this oil is hydrocarbon in nature (mainly limonene) and acts as carrier, not contributing to the flavour.

In order to use the aqueous extract of the comminuted fruit comprising the water-insoluble essential oil as the flavour component in a liquid soft drink it must be emulsified in such a way as to maintain a homogeneous emulsion in handling and storage. When used in powdered soft drink compositions on the other hand the essential oil must be encapsulated to produce a powder component.

The emulsification of the essential oil in the flavour composition and liquid soft drink is achieved with the aid of a weighting agent and/or an emulsifier. Weighting agents are substances, generally oils, which have specific gravities higher than 1.0 so that when added to the essential oil flavour, which has a specific gravity lower than 1.0, the specific gravity of essential oil plus weighting agent is approximately equal to the specific gravity of the aqueous emulsion or soft drink as a whole. Examples of suitable weighting agents are sucrose esters, rosin esters and polyol benzoates. The emulsifier, which is used in addition to the weighting agent to confer emulsion stability is commonly chosen from edible gums, pectins, celluloses, polysorbates, sorbitan esters and propylene glycol alginates.

Powdered soft drinks require that the essential oil flavour be converted to solid form. This is conventionally carried out by mixing the essential oil flavour with an aqueous solution of a suitable carrier, atomising the aqueous emulsion thereby obtained in spray-drying equipment and evaporating the water from the mist of fine droplets.

The natural product gum arabic has proved to be very effective as an emulsifier for essential oil flavour emulsions for liquid soft drinks and as the encapsulating agent for the essential oil flavour in powdered soft drinks and has been used extensively for some years for these two purposes.

Gum arabic is the dried exudate obtained from various species of trees of the genus <u>Acacia</u> of the <u>Leguminosae</u> family which are found in the tropical and semi-tropical areas of the world. The most important producing areas are the Republic of the Sudan and some of the countries in West Africa.

Unfortunately, the areas of the world from which gum arabic is obtained are subject to climatic and political uncertainties which can lead to reductions or interruptions in the supply of the product. There is therefore a considerable incentive to find a total or partial replacement for gum arabic in at least some of its applications.

It is known that some modified starches may be used as emulsifiers in flavour emulsions for liquid soft drinks or as encapsulating agents for powdered soft drinks but the types of modified starches which are acceptable are limited. In addition to being effective emulsifiers or encapsulating agents the modified starch must meet other requirements eg. it must give an emulsion which is freeze-thaw stable as well as fulfilling the obvious consideration of being acceptable to local food law. Freeze-thaw stability is important to the producer of the flavour emulsion since the emulsions may have to stand significant temperature variations in storage and transportation before being used by the soft-drink formulator.

We have now found certain modified starches which may be used as emulsifiers or encapsulating agents in soft drink formulations and which possess ancilliary properties, particularly in respect of freeze-thaw stability which enable then effectively to replace gum arabic in these applications. These modified starches are extruded, crossbonded, monosubstituted starches, particularly extruded, hydroxypropyldistarch phosphate, extruded, acetylated distarch adipate and extruded acetylated distarch phosphate.

Accordingly, the invention comprises a freeze-thaw stable flavour composition which comprises water, an essential oil flavour and an emulsifying amount of an extruded, crossbonded, monosubstituted starch. The latter is preferably an extruded, hydroxypropyldistarch phosphate, an extruded, acetylated distarch adipate or an extruded, acetylated distarch phosphate. (for reasons of brevity the extruded, crossbonded, monosubstituted starches used in the compositions of the present invention will be generally referred to in the remainder of this specification as "modified starches")

The modified starch which may be used in the compositions according to the invention is preferably tapioca starch or a modified waxy starch ie a high amylo-pectin starch which in this context means a starch containing more than 95% and generally about 98% by weight amylopectin. Although waxy starches may be obtained from a number of different plants eg waxy rice starch and waxy sorghum starch, it is preferred to use modified waxy corn starch.

The submission of the modified starch to an extrusion process means that the modified starch has been heated under conditions of shear by passage through an extruder in which the modified starch is forced through a die by the action of one or more screws. The significant factors in the extrusion process are the water content of the modified starch, which is preferably 5% to 30% by weight, more preferably 10% to 30% by weight, and the temperature in the extruder. It is preferred that the product temperature in the extruder

2

barrel lies in the range 100°C to 250°C, particularly about 200° to 210°C. The pH of the starch in the extruder is preferably in the range 3 to 7, particularly in the range 5 to 6.

The effect of extrusion under the conditions described above is to gelatinise the modified starch and at the same time to cause mild molecular degradation. The amount of degradation is the result of an interplay between the various extrusion parameters described in the preceding paragraph and choice of appropriate conditions will be apparent to those skilled in the art.

"Di-starch phosphate" and "di-starch adipate" mean that two starch amylose or amylopectin chains are cross-linked by phosphate or adipate ester linkages. The number of phosphate or adipate cross linkages and the number of hydroxypropyl or acetyl substituents dictate the properties of the respective modified starch. The "degree of substitution" (D.s.) is the average number of hydroxylic hydrogens per anhydroglucose unit (ie the starch molecule repeating unit) replaced by the phosphate, adipyl, hydroxypropyl and acetyl groups respectively. As there are three hydroxylic hydrogens per anhydroglucose unit the maximum DS is three. Conventionally, the phosphate and hydroxypropyl substitution are defined in terms of D.S. while the adipyl substitution is expressed in terms of part per million (ppm) adipyl (based on modified starch) and the acetyl substitution as % by weight acetyl (based on modified starch). For the modified starches used in the compositions of the present invention the DS with respect to phosphate is preferably $10^{-2}$ to $10^{-5}$ more preferably $10^{-4}$ to $10^{-5}$ and with respect to hydroxypropyl 0.03 to 0.2 more preferably 0.07 to 0.1. The amount of adipyl substitution is preferably 400 to 1200 ppm more preferably 500 to 900 ppm and the acetyl substitution 1.0 to 3.0% more preferably 1.5 to 2.5%.

The reaction of the starch with sodium tri-metaphosphate (or less preferably with phosphorus oxy-chloride) and propylene oxide on the one hand and acetic anhydride and adipic acid on the other takes place under conditions conventional for this type of reaction and typical examples of the reactions are described in more detail later in this specification.

Compositions according to the invention may comprise 2 to 10 weight % essential oil flavour, 4 to 20 weight % modified starch the balance being water. In addition, the composition may also comprise a weighting agent of the type and for the purpose described earlier in this specification, the amount of weighting agent being 4 to 15 weight %, and one or both of two further ingredients essential to a balanced soft drink ie a sweetener eg sucrose, dextrose, saccharine, aspartame or a cyclamate and an acidulant, eg. citric or tartaric acid, preferably in an amount 0.1 to 4% by weight. Other optional ingredients which may also be present include preservatives, antioxidants, colouring matter etc.

The invention will now be further described by reference to the following Examples.

## Example 1

### a) Preparation of extruded, hydroxypropyldistarch phosphate.

An aqueous slurry of granular waxy corn starch (35-45 % by weight dry solids) was heated to 40°C and 8.0% weight sodium sulphate (gelatinisation inhibitor) added followed by 1.2% by weight sodium hydroxide as a 3.5% by weight aqueous solution. After agitating the slurry for 15 minutes 0.1 % by weight (based on dry starch) trisodium metaphosphate was added and the slurry was maintained at 40°C for 20 minutes with a continuous nitrogen purge. At the end of the 20 minute period 8 % by weight (based on dry starch) of propylene oxide was added and stirring continued under nitrogen at a temperature of 40°C for 16 hours. The reaction mixture was finally acidified to pH 5 to 5.5 with sulphuric acid, filtered, washed with water and dried.

The hydroxypropyldistarch phosphate product of the reaction had a degree of substitution by di-phosphate (ie crossbonds) of $1.3 \times 10^{-4}$ and by hydroxypropyl groups of 0.07 to 0.09 and was characterised by normal Brabender viscosities at 95°C and 50°C of 550 to 650 Brabender units and 1350 to 1450 Brabender units respectively and acid Brabender viscosities at 95°C and 50°C of 700 to 800 Brabender units and 1350 to 1450 Brabender units respectively.

### Extrusion of the hydroxypropyldistarch phosphate

The extruder used was a CLEXTRAL BC 45 extruder with twin co-rotating screws which had a throughput capacity of 15-30 Kilograms/hour. The throughput used was 30 Kilograms/hour at a screw rate of 150 rpm, the modified starch being forced through 2x4 mm dies at 48 bar pressure. The initial moisture content of the modified starch was 14 % by weight its pH 5.4 and the extruder barrel temperature was 180°C giving a product of temperature 210°C.

The extruded product had a moisture content of 5.4% by weight and a cold-water solubility of 46.3% by weight. The Brookfield viscosity of a 10% by weight (dry basis) solution at 25°C was 185 cps initially rising to 260 cps after 24 hours. The Brabender viscosity of an 8% by weight solution was 70 Brabender Units at 50°C.

### b) Evaluation of the extruded, hydroxypropyldistarch phosphate.

The evaluation compared the modified starch with gum arabic in a standard flavour emulsion made up of the following components. Results are given in Table 1.

| | | |
|---|---|---|
| Orange oil | 4% by weight | ⎫ |
| Ester gum (weighting agent) | 9% by weight | ⎬ oil phase |
| Gum arabic or modified starch | See Table 1 | ⎭ |
| Sodium benzoate (preservative) | 0.1% by weight | |
| Citric acid | 0.4% by weight | |
| Water | balance up to 100% by weight | |

The emulsion was prepared by heating the combined oil phase to 30°C and mixing with the gum or modified starch in the form of a 30 % by weight aqueous solution in a high shear mixer. Water containing the citric acid and the preservative was then added to the mix in an amount necessary to make up the composition. The complete composition was then homogenised.

The "freeze-thaw" stability of the experimental emulsions were evaluated by placing the emulsion under test in a constant temperature bath at -10°C for one day, then transferring the sample to a water bath at 30°C and holding it at this temperature for 1 hour followed by centrifuging the sample at 2500 rpm for 0.5 hour and examining it for oil separation. This sequence constituted one "cycle" and was repeated up to 10 cycles. An emulsion which showed no signs of separation after four or more cycles was regarded as acceptably freeze-thaw stable although for the most demanding applications stability after ten cycles is regarded as being necessary.

### Example 2

#### a) Preparation of extruded, acetylated distarch adipate

100 Kg (dry substance) granular waxy corn starch was mixed with water to give a 20° Bé slurry. The pH of the slurry was then adjusted to 8.5 by the addition of 4 Kg sodium hydroxide in the form of a 3.5% weight/volume solution and a mixture of 0.12 Kilogram adipic acid dissolved in 5 Kilograms acetic anhydride added. Reaction took place at 30 °C by circulating the mixture in a static mixture, the pH being maintained at 8.0 to 8.5 by dosing with 3.5% weight/volume sodium hydroxide solution.

After the addition was complete the mixture was neutralised with hydrochloric acid to pH 5 to 5.5, filtered, washed and dried to a moisture content of 13% by weight.

The acetylated distarch adipate had an acetyl content of 1.6 to 1.9 (based on dry substance) and an adipyl content of 450 to 600 ppm (based on dry substance). The normal Brabender viscosity at 95°C was between 950 and 1150 Brabender units and at 50°C between 1500 and 1800 Brabender units. The acid Brabender viscosity at pH 3 and at 95°C was between 950 and 1150 Brabender units and at 50°C between 1450 and 1700 Brabender units.

#### Extrusion of the acetylated distarch adipate

The extrusion was carried out in the extruder described in Example 1.

The throughput rate was 30 Kg/hour at a screw rate of 250 rpm and pressure 34.5 bar. The pH of the modified starch was 4.7, the temperature of the extruder barrel was 220°C and the product temperature 208°C.

The extruded product had a moisture content of 5.4% by weight and a cold water solubility of 55.9 % by weight. The Brookfield viscosity of a 10% by weight (dry basis) solution was 125 cps initially and 135 cps after 24 hours. The Brabender viscosity of an 8% by weight solution was 50 Brabender Units at 50°C.

#### b) Evaluation of the acetylated distarch adipate

The results of the evaluation in the standard flavour emulsion described in Example 1 are shown in Table 1.

4

| Emulsifier | Gum Arabic | Product of Example I | Untreated ADSA * | Roll-dried** ADSA * | Product of Example II | Unmodified Extruded waxy corn starch |
|---|---|---|---|---|---|---|
| Concentration (weight %) | 18 | 18 | 6++ | 6++ | 18 | 18 |
| Emulsion Viscosity cp after 1 week | 112 | 1650 | 154 | 184 | 720 | 800 |
| Freeze-thaw cycles | >10 | >10 | 1 | 1 | 4 | 1 |
| No. of months without oil separation | 6 | 6 | 6 | 6 | 6 | |
| Soft drink + No. of weeks without oil separation | 12 | 12 | 12 | 12 | 12 | |

* Acetylated distarch adipate.

+ The soft drink was made up by blending 10.1 mls of the flavour emulsion with 602 grams of sucrose, 0.54 gram of sodium benzoate and 9 grams of citric acid the whole being made up to one litre with water.

** Roll-dried ADSA The acetylated distarch adipate was made by the process described in Example 2 but instead of being extruded it was dried by heating on rollers at 100° C. effectively gelatinising the modified starch and degrading it but to a lesser extent than in the extruder.

++ Amount used limited by viscosity considerations.

The storage tests were terminated after 6 months and 12 months respectively ie the Table indicates that the compositions were still stable at the end of these periods.

The results given in Table I indicate that extruded hydroxypropyldistarch phosphate and extruded acetylated-distarch adipate are satisfactory replacements for gum arabic in flavour emulsions, but that extruded unmodified starch or modified starch which has not been extruded or which has been roll dried are not satisfactory replacements. For the most demanding applications involving a high freeze-thaw resistance extruded hydroxypropyl distarch phosphate is recommended.


**Claims**

1. A freeze-thaw stable flavour composition characterised in that it comprises water, an essential oil flavour and an emulsifying amount of an extruded, crossbonded, monosubstituted starch.

2. A composition according to claim 1 characeised in that the extruded, crossbonded, monosubstituted starch is extruded, hydroxypropyldistarch phosphate; extruded, acetylated, distarch adipate or extruded, acetylated, distarch phosphate.

3. A composition according to claim 1 or claim 2 characterised in that the starch is waxy corn starch or tapioca starch.

4. A composition according to any one of the preceding claims characterised in that the hydroxypropyldistarch phosphate, acetylated distarch adipate or acetylated, distarch phosphate has been extruded at a moisture content of 10% to 30% by weight, at a product temperature in the extruder barrel of 100° C to 250° C and at a pH in the range 3 to 7.

5. A composition according to any one of the preceding claims characterised in that the degree of substitution of the extruded, hydroxypropyldistarch phosphate is $10^{-2}$ to $10^{-5}$ with respect to di-phosphate crossbonds and 0.03 to 0.2 with respect to hydroxypropyl.

6. A composition according to any one of claims 1 to 4 characterised in that the adipyl content of the extruded, acetylated distarch adipate is 400 to 1200 ppm based on modified starch and the acetyl content is 1.0 to 3.0% by weight based on modified starch.

7. A composition according to any of claims 1 to 4 characterized in that the acetylated distarch phosphate has a degree of substitution with respect to di-phosphate crossbonds of $10^{-2}$ to $10^{-5}$ and that its acetyl content is 1.0 to 3.0% by weight based on modified starch.

8. A composition according to any one of the preceding claims characterized in that it comprises 2 to 10 % by weight essential oil flavour, 4 to 20 % by weight extruded, hydroxypropyldistarch phosphate, extruded, acetylated distarch adipate or extruded acetylated distarch phosphate and optionally minor amounts of other ingredients, the balance being water.

5

9. A composition according to claim 8 characterized in that the optional ingredients are 4 to 15 % by weight weighting agent and/or 0.1 to 4 % by weight acidulant.

10. A composition according to claim 8 or claim 9 characterized in that the optional ingredients are one or more of a sweetener, a preservative, an antioxidant and colouring matter.

11. A solid flavour composition characterized in that the water is evaporated from a composition according to any cne of claims 1 to 10 preferably, by atomising the composition in spray-drying equipment.

12. A soft drink characterized in that it contains 0.1 to 0.4 weight % of a flavour composition according to any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 354 606 (CPC INTERNATIONAL)<br>* Claims 1-10; page 4, lines 23-28;<br>page 8, line 31 - page 9, line 5 *<br>--- | 1,2,8,<br>10,11 | A 23 L 1/22<br>A 23 L 2/26<br>A 23 L 1/052 |
| A | US-A-4 229 489 (C.W. CHIU et al.)<br>* Claims 1,3,5; example II *<br>--- | 1,2,8,<br>10 | |
| A | US-A-3 443 964 (N.G. MAROTTA et al.)<br>* Claim 1; example V *<br>--- | 1,2,8,<br>10 | |
| A | EP-A-0 188 398 (NABISCO)<br>* Claim 1 *<br>----- | 1 | |

TECHNICAL FIELDS
SEARCHED (Int. Cl.5)

A 23 L

The present search report has been drawn up for all claims

| Place of search | Date of completion of the search | Examiner |
|---|---|---|
| THE HAGUE | 05-12-1989 | VAN MOER A.M.J. |

EPO FORM 1503 03.82 (P0401)